(19)

Europäisches
Patentamt
European
Patent Office
Office européen
des brevets

(11) **EP 2 485 487 A1**

(12) **EUROPEAN PATENT APPLICATION**

(43) Date of publication:
**08.08.2012 Bulletin 2012/32**

(21) Application number: **11153367.5**

(22) Date of filing: **04.02.2011**

(51) Int Cl.:
*H04N 7/26* (2006.01)     *H04N 7/36* (2006.01)
*H04N 7/50* (2006.01)     *H04N 7/18* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **EgAg Comp.Ltd.**
**13-17 Wah Sing Street,**
**Kwai Chung**
**Hainan Hong Kong (CN)**

(72) Inventor: **Vlaming, Ruud**
**1871 AG, Schoorl (NL)**

(74) Representative: **Grootscholten, Johannes A.M.**
**Arnold & Siedsma**
**Sweelinckplein 1**
**2517 GK Den Haag (NL)**

(54) **Compression of images in a sequence**

(57)    The present invention relates to a method and system of processing sequences of images, depicting a scene to assemble in the sequence a movie. The method comprises:
- preprocessing subsequent images individually, to obtain a sequence of preprocessed images;
- encoding for compression of the preprocessed images by
* periodically allowing individual images to pass without encoding; and
* encoding intermediate images in the sequence between the uncompressed images by replacing intermediate images with differences. The method further entails prior to encoding of intermediate images:

- in at least one of the intermediate images, identifying areas where the intermediate images have not or at least not significantly changed; and
- replacing the identified areas by corresponding areas from the most recently passed uncompressed image.

EP 2 485 487 A1

**Description**

The present invention relates to a method of and a system for processing and transmitting and/or recording sequences of images and data compression, according to the preambles of respectively claims 1 and 14.

Such methods and systems are commonly known. For instance the standards MPEG2, MPEG4, mjpeg, H.26X and as a particular non-limiting example below H.264 and X.264, and many other algorithms and standards as well, rely on compression of bitstreams for recording or transmission on the basis of redundancy of information in subsequent images in a sequence. Most often according to such standards and algorithms, such redundancy is exploited by reducing the amount of information in a current image to only differential information providing information only on differences between pixels in that current image and corresponding pixels in a preceding or future image in the sequence. According to such standards and algorithms, uncompressed images are recorded or transmitted, which can be referred to in some publications as I frames, while intermediate compressed images are often referred to as P or B frames, although the present invention is not limited to such expressions or features.

The prior art methods and systems still pose a considerable load for any transmission or recording method and/or system, since the amount of information resulting from the known methods and originating from the known systems is still considerable, and may still at least contribute to overload of networks, recorders and transmitters, especially in fields of use where bandwidth is sparse, and possibly also remote, as is the case with for example surveillance cameras which do require the images acquired thereby to be recorded or more preferably to be sent immediately to a control room or the like. However, the invention is particularly not restricted to any such field of application, since data compression or at least reduction, preferably with no or at least no further or additional deterioration of image quality, is always an objective in any field of use of digitized image processing and recording or transmission.

The present invention was developed with the objective to remedy or at least lessen the disadvantages of the prior art methods and systems, and improve data compression and/or reduction (even) further, for which the invention relates to a method and system with the distinguishing features of the characterizing portions of respectively claims 1 and 14.

It is noted that the invention can be embodied in a camera or in an images processing configuration, such as a computer, connected to a camera, or any device other than a camera for registering images. An obtained stream of images may be recorded on a (hard) disc or other record carrier, or transmitted over a network, which may be wireless.

The present invention goes against the widely held belief that differential image processing according to the prior art practically already provides a maximum data compression and/or reduction for transmission or recording.

However, in particular when sequences of images comprise little change in the scenes depicted in accordance therewith, a considerable gain is achievable nonetheless according to the present invention.

The method and system according to the present invention can have many preferred embodiments of which only a selection are defined in the dependent claims.

In addition the method and system according to the present invention may for instance exhibit the feature that the areas in the intermediate images and in the uncompressed images correspond in size. This facilitates a comparison of the image areas for the uncompressed and intermediate (sometimes below referred to as current) images.

In addition and/or as an alternative the method and system according to the present invention may for instance exhibit the feature that the uncompressed and intermediate images comprise an integer number of areas.

In addition and/or as an alternative the method and system according to the present invention may for instance exhibit the feature that the areas have a size that is one of the sizes from the group, comprising: 20 * 15 pixels, 24 * 18 pixels, and 32 * 32 pixels. In a below described application, an area size of 32 * 32 is preferred, but alternative sizes may be preferred in other applications.

In addition and/or as an alternative the method and system according to the present invention may for instance exhibit the feature that the areas can be grouped in rectangles having possible sizes, that is one of: 20 * 15 blocks or 24 * 18 blocks, but are not limited to these values.

In addition and/or as an alternative the method and system according to the present invention may for instance exhibit the feature that identifying the areas where the intermediate images have not or at least not significantly changed relative to the most recently passed uncompressed image comprises comparing the intermediate image and the uncompressed image in the form of the original images.

In addition and/or as an alternative the method and system according to the present invention may for instance exhibit the feature that identifying the areas where the intermediate images have not or at least not significantly changed relative to the most recently passed uncompressed image comprises comparing the intermediate image and the uncompressed image in the luminance channel.

In addition and/or as an alternative the method and system according to the present invention may for instance exhibit the feature that identifying the areas where the intermediate images have not or at least not significantly changed relative to the most recently passed uncompressed image comprises comparing the intermediate image and the uncompressed image in at least one of the chroma channels.

In addition and/or as an alternative the method and system according to the present invention may for instance exhibit the feature that identifying the areas where the intermediate images have not or at least not significantly changed relative to the most recently passed uncompressed image comprises comparing the intermediate image and the uncompressed image area by area.

In addition and/or as an alternative the method and system according to the present invention may for instance exhibit the feature that identifying the areas where the intermediate images have not or at least not significantly changed relative to the most recently passed uncompressed image comprises comparing the intermediate image and the uncompressed image using a statistical analysis method.

In addition and/or as an alternative the method and system according to the present invention may for instance exhibit the feature that identifying the areas where the intermediate images have not or at least not significantly changed relative to the most recently passed uncompressed image comprises defining a difference between at least a relevant area of the intermediate image and the uncompressed image and comparing the difference with a predetermined threshold value, and deciding an area is to be replaced if the difference is below the threshold value.

In such a preferred embodiment with a difference and comparing that with a threshold value, the method and system according to the present invention may for instance exhibit the feature that the difference comprises a function based on pixel-by-pixel comparison within one area in at least one of the luminance and the chroma channels.

In such a preferred embodiment with a function defining the difference, the method and system according to the present invention may for instance exhibit the feature of suppressing in the function the influence of sparkles or reflections, where the function comprises a sparkle-compensation factor.

In such a preferred embodiment with a function defining the difference, the method and system according to the present invention may for instance exhibit the feature of suppressing in the function the influence of changes in lighting or camera induced changes in white balance, where the function comprises a lighting and white balance normalizing factor.

In such a preferred embodiment with a function defining the difference, the method and system according to the present invention may for instance exhibit the feature of suppressing in the function the influence of changes in camera induced changes in color balance, where the function comprises a color balance normalizing factor.

The present invention will be elucidated below, referring to a particular embodiment thereof, as shown in the drawing and described through reference to the drawing and to a specific algorithm or standard, of which neither the drawing nor the description is, however, to be interpreted as a restriction on the scope of protection for the invention, which is - after all - defined exclusively in the appended claims. In the drawing:

Fig. 1 shows a division of an exemplary protocol, in which the present invention may be employed, into levels and profiles, according to which encoding and resulting data compression of reduction are executed;
Fig. 2 shows a division of an image depicting a scene, and the manner of dividing the image in a luminance (Y) plane and two color difference planes (chroma Cr and Chroma Cb);
Fig. 3 shows division according to the invention of an image into areas (occasionally referred to herein as "superblocks") comprising several conventional macroblocks and optional addition thereto of chromablocks;
Fig. 4 shows in general the manner of conventional generation of a jpeg bitstream from an 8 * 8 pixel block;
Fig. 5 the configuration of uncompressed I-frame images and compressed P- and B-frame images are arranged in a sequence of frames;
Fig. 6 shows interrelations between I-, P- and B-frames;
Fig. 7 shows conventional vector adaptation to compensate for movement of a (part of a) scene in conventional data compression;
Fig. 8 shows a comparison (differential view) between a current image (to be processed and compressed) and an immediately preceding full (I-frame) image in a luminance plane;
Fig. 9 shows identification of areas in the both the current and the most recently passed full (I-frame) of areas where significant change has occurred between the two compared images, i.e. in the luminance plane as shown in Fig. 8; and
Fig. 10 shows which parts of the most recently passed full (I-frame) image are copied from the most recently passed full (I-frame) image to the current image for processing and data compression.

Prior to a more detailed explanation of the present invention, as an example, the framework of a X.264 / H.264 protocols will be described as one within which the present invention may be implemented, without limitation thereto, as a consequence of which the present invention is at least equally applicable in other algorithms and protocols.

*X.264 protocol*

The X.264/H.264 library implements a variety of new encoding protocols and old protocols that where already a part of H.263 or mpeg4. It is noted that the complete mpeg4 specification, with more than over 20 so called extension parts, is huge, and cannot be discussed here in its entirety. For the present invention, however, only a basic understanding of the definitions of the protocol is necessary for a proper understanding of the invention. It is of importance to identify, that this exemplary protocol / standard is based on:

- Modified DCT spatial transform of macroblocks;
- Second stage Hadamard transform of the DC macroblock coefficients (not further discussed below);
- Rectangular partitioning of the macroblocks;
- Color difference coding definitions (4:2:0, 4:2:2 or 4:4:4);
- I, P and B frame types with extended reference frame definitions;
- Optionally a variable block size motion compensation; and
- Entropy encoding systems CABAC and CAVLC (not further discussed below).

There are many more features than these present in the H.264 specification, but they are not of interest for the present invention. A more detailed discussion of some of the techniques / features is given below, in as far as is considered expedient for describing and defining the present invention.

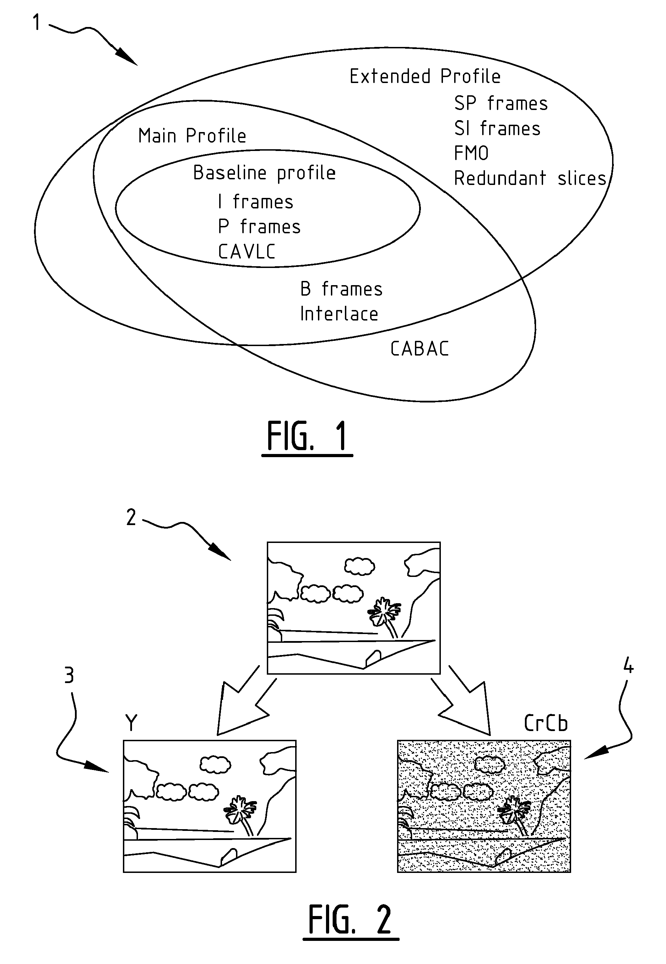

One aspect of the H.264 specification, that is important to mention, is that the protocol 1 is divided, in a manner that is well known to the skilled person, into levels and profiles, as depicted schematically in Fig. 1. Encoding and consequent data reduction is executed in accordance with these levels and profiles. The supported profile indicates which compression techniques are used, the supported level indicates what the decoder must be able to process at what speeds. Again, the details are less important here, but what is important is to realize that a comparison between any alternative protocol with and without the present invention for different or other compression methods must take this into account, otherwise a fair comparison cannot be made.

Delving somewhat deeper into the matter, not only the used compression features are of importance, but also the way those are tuned. Under the hood, parameters are set at encoding that make a huge difference in the end result regarding quality and quantity of the images and the bitstream. In cameras these parameters are usually set to fixed values, that may or may not suit any particular application in question.

The approach with respect to the present invention with regard to this problem is an agnostic one. The method and system according to the invention augments H.264, and, depending on further fine tuning of the internal parameters, the overall gain may be smaller or larger.

Before entering into detail, it is noted here that the discussion below is only intended to clarify the method and system according to the invention, rather than to provide a full overview of the whole H.264 protocol definition. Nor is the invention restricted or limited to this or any other protocol. For the sake of brevity, the H.264 protocol is referred to here and consequently incorporated herein by reference.

*Color difference coding definitions (4:2:0, 4:2:2 or 4:4:4)*

A full color image 2, consisting of the colors red, green and blue, is transformed into three new 'planes', one luminance plane 3 (carrying the black/white image) called Y 'plane' and two color difference planes 4, called the chroma 'Cr' and chroma 'Cb' plane, shown schematically in Fig. 2.

This conversion process does not constitute a data reduction, but since the eye is much more perceptive to the luminance than to the color information, this separation makes it possible to compress each plane differently. Three different coding schemes for encoding into the aforementioned planes are used: 4:2:0, 4:2:2 or 4:4:4. The latter indicates that all information is used for compression, whereas 4:2:2 and 4:2:0 reduces the number of pixels by a factor of 2 or 4, by just removing the pixels, or using some kind of interpolation scheme. The consequence is that the pixel buffers also differ in size. This is important with respect to the present invention, since the planes have to be treated separately for the method and in the system according to the invention. This becomes more apparent from the description below.

*Macroblocks*

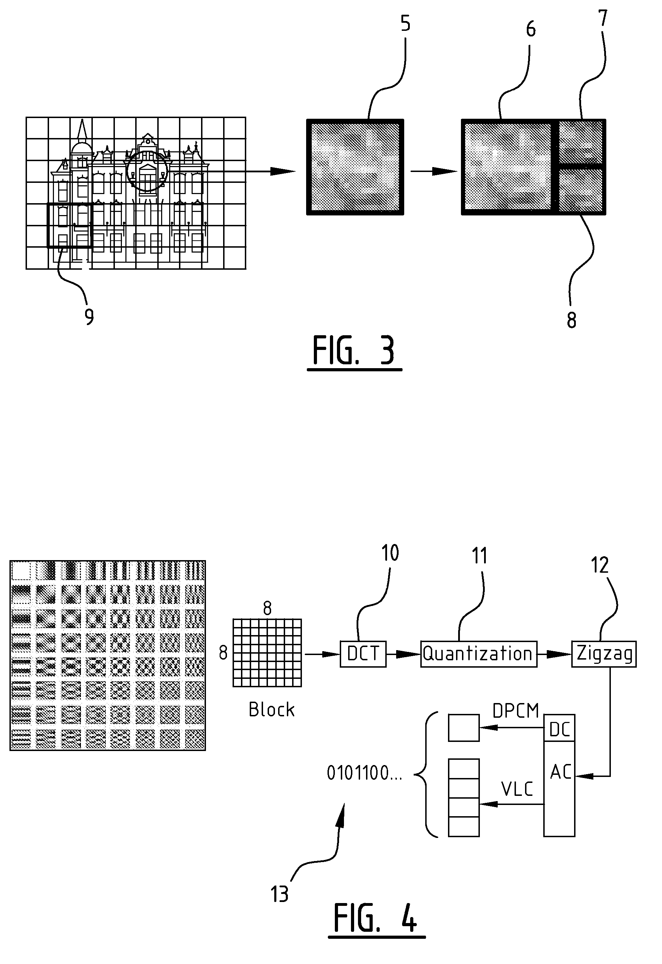

The total image 2 is decomposed into macroblocks 5, as shown schematically in Fig. 3. The macroblocks are groups of neighboring pixels that form a square or rectangle. This is done per plane. The macroblocks are 16x16, 16x8, 8x16, 8x8 pixels in size, depending on the type. Square macroblocks are used as the basis for modified DCT transformations. Macroblocks can be divided into sub macroblocks of size 8x8, 8x4, 4x8, 4x4. All types can be used for motion compensation.

In Fig. 3 a 160x112 pixel image is shown, which is decomposed into macroblocks 5, and the process of color separation. Here the color coding is 4:2:0, yielding a 16X16 luminance block 6 in the luminance (Y) plane and to 4X4 chroma blocks 7, 8 Cr and Cb in the chroma planes.

It is important, here, to realize that in the embodiment of Fig. 3, the largest entity is the 16x16 pixels macroblock entity. According to the invention, however, a superstructure called a superblock is defined, in which all macroblocks and sub macroblocks are contained. We choose for example for a superblock with dimensions 32x32 pixels, which is designated by white square 9 in Fig. 3. However, this number is in principle freely selectable, and a superblock according to the invention could have the same size as a macroblock or could even be smaller. A superblock size is freely selectable since in this way boundary effects over the edges of superblocks can be prevented at least to some extent. Selection of the superblock size can be used as a tool for minimizing such boundary effects.

*DCT transform of the DC macroblock coefficients*

DCT ("Discrete Cosine Transformation") 10, employed in H.264 as shown in Fig. 4, is a rounded version of a full form of the discrete cosine transform, which is made to work with integers.

Calculations with integers are usually much faster, especially on risc processors like the in itself generally known ARM processor. On the left in Fig. 4 the two dimensional base functions of the modified DCT 10 for a macroblock are displayed, on the right the process of the simplified transformation of an 8x8 macroblock. The DCT transformation 10 is in itself a projection of the image onto the base functions, generating a coefficient matrix. For macroblocks that contain only smooth image parts, most coefficients are zero, or close to zero.

With quantization 11 these coefficients are encoded and those coefficients are set to zero, that are already small. This is where a large part of the compression takes place. Subsequently, the coefficients are read in a zigzag manner 12, to make sure the zeros are at the end, for efficient run length coding. After some more steps, which are well known to the skilled person, a data stream 13 consisting of a series of 0's and 1's for transmission and/or recording is generated. A general representation of this process step is shown in Fig. 4.

*I, P and B frame types with extended reference frame definitions.*

After the images are divided into color planes and subsequently into macroblocks, DCT transformed and compressed, we have a stream individually encoded images.

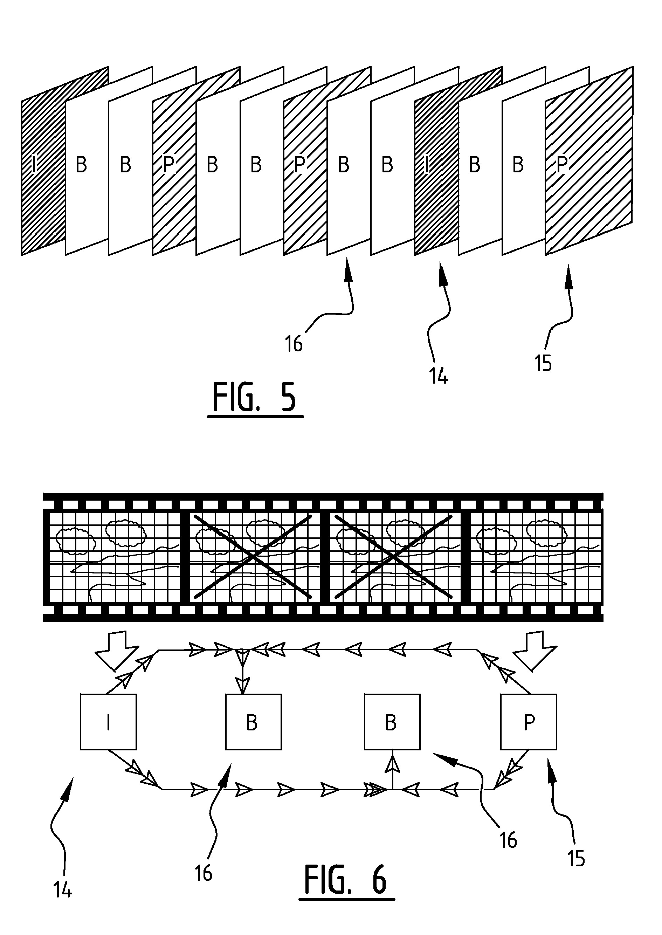

However, images in a stream usually have a lot of correlation among each other. This can be utilized for compression or data reduction for transmission and/or recording by defining three well known types of frames, the so called I, P and B frames, respectively designated as 14, 15 and 16 in Fig. 5. These I, P and B frames 14, 15 and 16 are usually arranged in an order I,B,B,P,B,B,P, .... I, etc, as shown in Fig. 5 and 6. A possible algorithm for determining I, P and B frames in a sequence is depicted in particular in Fig. 6.

The I frame 14 contains a complete image, the P frame 15 contains differences between a former I frame 14 and the encoded image, and the B frame 16 contains differences between two P frames 15 or a P frame 15 and I frame 14, as is schematically represented in Fig. 6 in particular.

Since sending over only differences will deteriorate the stream continuously, if persisted for too long, every now and then a new I frame is sent.

*Variable block size motion compensation*

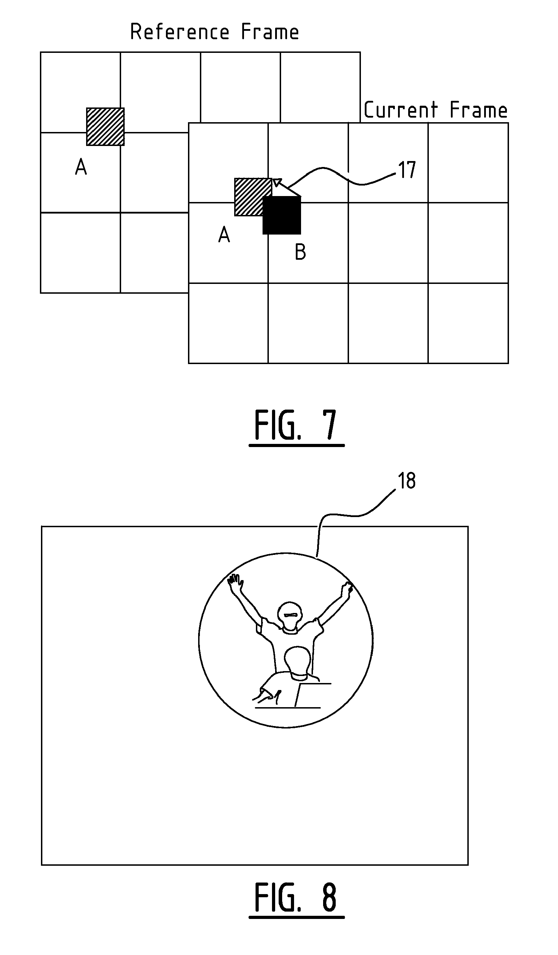

Redundancy between frames is further exploited by searching for parts that are equal, possibly through shifting blocks over an image to find the corresponding blocks that are the same for a scene in two subsequent images. It is much more efficient to store a translation vector 17 to an already known block of data than to include the DCT coefficients of the block twice. How these similar portions of the image are found is not really important here, only that it happens, as is illustrated in Fig. 7. The part B from the current frames matches the part A from the reference frame, hence we only need to code the translation vector 17.

Therefore, any method that utilizes for data reduction or compression the similarities between scenes in the reference frame and the current frame will lead to efficient coding of the images stream.

After the foregoing discussion on aspects of the exemplary H.264 protocol, for a better understanding of a possible environment in which an embodiment of the present invention may be employed, the invention itself will now be described in more detail below.

The method according to the invention will be referred to herein also as DSBM (Differential Super Block Masking). As indicated above when describing Fig. 3, superblocks as according to the present invention are distinct from the macroblocks of the conventional H.264 method, even though the size and location thereof could be chosen the same as those of the conventional macroblocks. The details about how the method and system function are discussed below.

It is important to note here that the method can be implemented as an extra module (add on) on the X.264 protocol in such a way that the method according to the invention stays within the specifications of H.264. This has for a consequence that on the receiver side or - if the data stream was recorded rather than transmitted - on the side of the player, no special measures need to be taken for decompression / decoding and subsequent presentation of reconstructed images.

*Image analysis*

As discussed above the images in a sequence or stream exhibit a degree of redundancy. That is, in most cases, in a sequence neighboring images are mostly equal, except a few differences. This is especially the case with image sequences from surveillance cameras. The system of I frames 14, P frames 15 and B frames 16 already exploits this phenomenon to an extent, so it could seem that there is no room for improvement here, which hitherto has been the skilled person's perception and also prejudice.

However, there is, for instance, a key difference between violently changing sequences of images in movies on the one hand and slowly or hardly changing sequences of images in movies and from surveillance cameras. The difference is in the way those images are used. While watching normal video the user expects a fluent and clear image and every detail of the image matters. Of course, for surveillance cameras the details are important too, and a blurry image is certainly not desired, but for the practically stationary parts of sequences of these images it does not really matter if they are recent or somewhat older. The difference between these more recent and older images is usually only noise and the illumination of the scene. These are for the user unimportant, but have been found to surprisingly contribute a large part of information to the data stream for transmission and/or recording.

According to the invention, if two sequential or close and practically identical pictures in a stream from a camera are subtracted, a differential picture is obtained which, apart from noise and illumination changes, will not contain much or even not any information.

Thus the key idea for further reducing the size of the data stream is to identify which parts are sufficiently constant. For these parts we simply use a part or piece in terms of macroblocks from an older image, such as an I-frame 14, and consequently send no information at all with respect to that part or piece of the current image. A part of a current image is identified as sufficiently constant when there is only a difference in noise, illumination or where other irrelevant changes have taken place.

In a differential representation, such as for example Fig. 8, based on a comparison of two images in the luminance plane - one image with a subject person sitting down and a subsequent image, in which the subject person has stood up and spread out his arms, the effect of standing up becomes clearly visible. Both the person sitting down and standing up with outspread arms are discernable in this representation, the general area of which is indicated as 18.

Consequently this image change is also automatically detectable per macroblock or for the entire image, as the relevant parts differ substantially. This fact is utilized, for which according to the present invention the superblocks are defined as a possibly but not necessarily distinct entity relative to the macroblocks.

*Superblock decomposition*

Searching for the relevant changes is therefore performed in one possible embodiment of the invention by dividing the image into superblocks. These blocks are preferably but not necessarily large enough to encompass any block algorithm used by H.264, or other algorithm or protocol, with which the present invention is utilized. One possible choice for the size of such a superblock is 32x32 pixels, but there can reasons to decide otherwise. Since most images are 640x480, 768x576 or larger, we have always an integer number of superblocks 20x15, 24x18 or more.

However, there's no requirement according to the invention for the superblock to be mutually exclusive: specific pixels can even be in more than one superblock, and there's also no requirement to have an integer number of superblocks in one image. After all, the superblocks are mainly (if not essentially) only used for detection which parts of the image may be replaced by parts of an older full image, for instance an I-image, to reduce the volume of information to be transmitted and thus compress the resulting bitstream. It is noted that for the sake of simplicity of computations and processing, it may be preferable to have integer numbers of superblocks per frame or image and have mutual exclusivity of the superblocks in the sense that any one pixel may be in one superblock only.

It is noted here that for 4:2:0 sampling the superblock is 32x32 pixels in the luminance plane and 16x16 in the chroma planes. For these special care has to be taken.

*Comparison in luminance and chroma channels*

For any current frame C from the stream the most recently passed full image or frame (possible an I frame in the conventional sense of the H.264 or X.264 or MPEG2 or MPEG4 et cetera) is taken as a reference image. Both the current C and the reference I image are divided into superblocks and those superblocks are compared on superblock-by-superblock basis for each superblock in the current frame or image and a corresponding superblock in the most recently passed uncompressed frame or image. The expression "corresponding" is intended to indicate that a superblock in the most recent I frame or image and in the current C frame or image are corresponding in relation to the location in the scene depicted in accordance with these most recently passed full and current frames.

If the superblocks are found to differ only insignificantly, the superblock in the current frame C is replaced by a corresponding superblock of the original or passed full frame or image. This sub-process is executed prior to any DCT compression or motion compensation. One identical superblock will result in 4 identical macroblocks and H.264 motion compensation will recognize the great similarities between the macroblocks of the most recent I frame and current (subsequent) frame C, leading to a very efficient coding, and thus to a reduction of the amount of data in the eventually generated data stream.

It is noted that, due to this approach, the data stream cannot increase. In the worst case, the generated data stream will have the same volume as it would be without incorporation of the method and system according to the present invention.

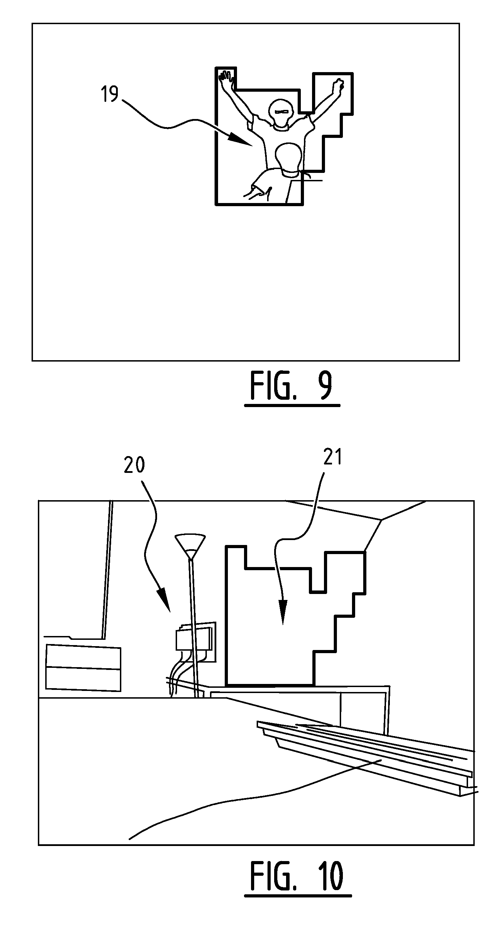

In the view of Fig. 9, which is similar to Fig. 8, superblocks where important movements have occurred and have been detected using the below described algorithm, are in combination outlined, since these superblocks were recognized as sufficiently "different" on the basis of differences in the luminance plane. The set of superblocks 19 is more detailed than the general outline of Fig. 8, since the representation of Fig. 8 shows a general intuitive outline 18 rather than the detected outline 19 following superblocks of Fig. 9. These are the superblocks in combination 19, that are kept in the current image C, all the others (without a noteworthy chance therein) will be replaced by superblocks from the most recent fully passed frame, in particular the I frame. This I-frame 20 is shown in Fig. 10, or at least those parts thereof are shown in Fig. 10 that are copied to the relevant current frame C. The "hole" 21 in this image of Fig. 10 corresponds with the outline of superblocks 19 in the differential image of Fig. 9, in which relevant movement was detected, as described in relation to figures 8 and 9. These superblocks were recognized as different because the person in the image stood up (very) quickly. Such a very quick change is not likely to occur in sequential images or images that are close to one another in an image sequence, but for the sake of clarifying the present invention, this exaggeration is considered justified.

As indicated above, detection of differences between images is in this embodiment performed by comparing images in the luminance plane. It is noted here that alternatively or additionally difference detection can be performed on the basis of the chroma planes or even also general statistical properties of (part of) the images.

It has been noted that when executing a comparison in one plane (Luminance or Chroma) in specific places of the image the contrast in the difference may be insufficient to decide whether a change has occurred between immediately neighbouring or more remote images, if this comparison is performed on the basis of luminance comparison or chroma comparison alone. Therefore, the invention also entails the possibility of performing both these and/or any other comparison, if desired and beneficial, such as - but not limited to - statistical properties.

The remaining issue is then how to determine whether a superblock from the current frame differs from the one of the last I frame.

To that end, the (i,j) superblock $S^c$ of the current frame C is defined as $C_{i,j}$ and the superblock $S^I$ of the most recent I frame as $I_{i,j}$. Furthermore, a measure $d(S^P,S^Q)$ is defined as the distance (difference) between the superblocks $S^p$ and $S^Q$ in the vector space of superblocks. Superblocks are defined to be identical if

$$d(S^P, S^Q) < d_{max}$$

If the superblocks $C_{i,j}$ and $I_{i,j}$ are identical in this sense the superblock (i,j) in frame C will be replaced by the superblock (i,j) in frame I.

Thus, focus is on the definition of the threshold value $d(S^P, S^Q)$. Many shapes and forms to define the threshold may be employed, all within the bounds of the present invention. Below, a possible embodiment is described, which by no means is presented as limiting in the present invention. Assuming that luminance pixels of the superblock S are defined as $S^{[L]}_{n,m}$ with, in the present case, $0 \leq n < 32$ and $0 \leq m < 32$ for a superblock size of 32*32. The chroma pixels are defined as $S^{[Cr]}_{n,m}$ and $S^{[Cb]}_{n,m}$, with $0 \leq n < 16$ and $0 \leq m < 16$ for the 4:2:0 sampling method. The (integer) value of each pixel $S_{n,m}$ is within the boundaries $0 \leq S_{n,m} < V_{max}$, with $V_{max} = 256$. The threshold value d in a further refined approximation of an optimal function ($d^{[2]}$) may then be defined as:

$$d^{[1]}( S^{P,[x]}_{n,m} , S^{Q,[x]}_{n,m} ) = \sum_n \sum_m \left| U( (S^{P,[x]}_{n,m} - S^{Q,[x]}_{n,m})/24) \right|$$

wherein:

$$U(x) = -1 \quad for \quad x \leq -1$$

$$U(x) = 0 \quad for \quad 1 < x < -1$$

$$U(x) = 1 \quad for \quad x \geq 1$$

and wherein the superblocks $S^{P,\ [x]}$ and $S^{Q,\ [x]}$ are chosen from the same (luminance or chroma) plane x. This will always be the case, so the plane will below not be identified again.

In a first and tested attempt at defining the threshold value, the threshold measure was only applied on the luminance plane, and after testing set to a value $d_{max} = 2$, which was considered to yield optimal results.

This threshold value already provided in testing a considerable reduction in the data stream to a receiver / player, but with hardly any noticeable deterioration of a reproduced sequence of images at the receiver / player side. However, this difference function relative to a threshold also exhibits some disadvantages. First of all, images with high contrast, for example with sunlight through a window, can cause many superblocks to exceed the threshold and be transmitted, while these superblocks are actually not of special interest. This may for instance be due to the (random) sparkle off reflective surfaces in a scenes according to the image. Further, at this approximated threshold level value subtle, low contrast differences in the image were not recognized as genuine differences.

The threshold value can also be defined as a more complex function with parameters, so that these can be tuned to the camera that is actually used, as well as other circumstances. Namely, it turned out that white balance and noise levels have a distinct effect on a proper choice of the difference function and/or threshold value. As a possible further refined embodiment of the present invention, the following difference function is proposed:

$$d^{[2]}(\ S^{P}_{n,m}\ ,\ S^{Q}_{n,m}\ ) =$$
$$\sum_{n} \sum_{m} U\ (2\ V_{max}\left| (S^{P}_{n,m} - S^{Q}_{n,m}) \right|\ /\ (\ 2V_{max} B_{1} + (B_{h}-B_{1})(S^{P}_{n,m} + S^{Q}_{n,m})))$$

wherein $B_{1}$ and $B_{h}$ are parameters compensating for the sparkle effect. Thus the threshold function comprises a sparkle compensation.

It was determined from testing this function, that reasonable values are $B_{1} = 16$ and $B_{h} = 32$ for specific circumstances, such as the actually used camera (may vary for other camera's, in particular the white balance thereof and noise levels generated thereby), but also effects from lighting circumstances, et cetera. This corrected difference function is a linear function, but it may, depending on the camera and/or other circumstances, also be necessary to make a quadratic correction.

The calculations on the superblocks in the above provided and described example were performed in the luminance plane only. However, there are situations where moving objects only differ in color, or differ mostly in color. Therefore according to the present invention it is alternatively or additionally possible to also calculate difference function and compare that to the threshold in the chroma plane(s). To that end, one can use measure $d^{[1]}$ (a specific fixed value). Now, if one of the channels exceeds the threshold $d_{max}$ we must leave the superblock alone, and not replace the relevant superblock with a corresponding superblock from a previous full and passed image (the most recent I frame).

*Correction techniques*

The sparkle corrected difference function as described above, however, exhibits a property that if only the lighting of the scene changes, almost all superblocks are seen as changed, but that nothing really interesting has happened between the current image C and the preceding image I. The same applies to the color balance. Cameras have the tendency to change the white balance automatically when the lighting changes, which in turn may result in a shift in the color balance. This can happen very frequently, for instance when the weather is cloudy.

As a countermeasure to prevent such regular occurrences from affecting the achieved or desired reduction in a bitrate to transmit the images, a normalization of the lighting and color balance is proposed here. This normalization is performed per superblock.

First, the averaged illumination is calculated:

$$S^P_{ave} = \sum_n \sum_m S^P_{n,m} / V_{max}^2$$

so the replacement superblock $S^N$ would be:

$$S^N_{n,m} = (S^C_{ave} / S^I_{ave}) \; S^I_{n,m} \; \forall \; n,m$$

Which yields, when this formula is applied in a further modified threshold function $d^{[3]}$:

$$d^{[3]}(S^C_{n,m}, S^I_{n,m}) = \sum_n \sum_m U \left( 2 V_{max} \left| (S^N_{n,m} - S^I_{n,m}) \right| / ( 2V_{max} B_1 + (B_h - B_1)(S^N_{n,m} + S^I_{n,m}) ) \right),$$

And this formula can be employed to decide whether or not the superblock in a current image can be replaced by a corresponding superblock from a most recent I image. This algorithm can be used for the luminance L and chroma Cr, Cb planes alike.

*Image artifacts*

What can be said about the quality of the images? Since the image itself is not processed in a way other then H.264 we may expect all the artifacts which are normally present in the H.264 video stream. However, the replacement of parts of the image by older parts, may lead to a number of effects which are visible as a distortion of the image. These are:

- tiling: edge effects on the superblock boundaries,
- strong-tiling: color and/or luminance differences between adjacent superblocks,
- ghosting: faulty superblock replacement.

The first to effects are in fact related. Superblocks from older images are used and are only corrected to the overall luminance and average color value of the current superblock, so that it only introduces one coefficient in the DCT of the underlying macroblocks. This should usually be sufficient, but higher order variations in the lighting situation may become visible, especially at the edges of neighboring superblocks. This effects may be reduced by optimization and tuning of the parameters, although these effects will always play some role. Also, selecting short period for refreshing the I image will help.

In contrast it is noted that such disadvantages do not necessarily pose a problem. Especially in cases where the invention is for instance used in the context of surveillance cameras, these effects are mostly aesthetic, without any impact on the content of the images, and do not really form a true disadvantage.

The last of the three mentioned effects is however a more serious problem, and results from the algorithm of replacing a superblock in a current image C by one of the I frame where this should not be done.

In this case it appears as if a part of the image is missing or incorrect. The is especially painful when these are interesting to the user. This is in most cases a result of incorrect tuning of the parameters. If these are set too strict, in order to compress the bitstream beyond reasonable values, important superblocks from current images are replaced together with less important superblocks, by corresponding superblocks from the most recent I image. Since such tuning of the threshold function parameters will in most cases be camera type dependent, tuning the parameters must be done with care. When performed carefully and properly, it should be possible to mostly avoid faulty superblock replacement.

For instance upon reproduction of a sequence of images, if the parameters are set incorrectly, this effect may occur. In a reproduced image there may be spurious blocks, or in other pictures there may even be a piece of an object, for instance a (part of an) arm of a person, missing. This may occur when such an piece of an object did not not exhibit a high contrast with the surroundings thereof and the color difference detection is switched off.

*EFFECTS OF THE INVENTION*

*Measurement results and stream sizes*

First, measurement results using an Axis 2100 network camera are presented. The measurements were performed under normal daylight conditions and under low daylight conditions. The latter situation produces more noise, so that resulting images are usually harder to compress. To deal with this, the camera frame rate is made to depend on the amount of ambient light, For low light conditions a frame rate of approximately 10 frames/second (fps) may be selected, and for normal light condition about 15 fps. The only other parameter to be varied, is the number of B frames. Other parameters such as the quantization threshold for digitization of images are set at default or 'factory values', and are left unchanged. In common applications, the number of B frames in each P part image cycle (period in terms of the number of frames between subsequent P frames) is set around two. To determine the usefulness of the present invention, tests were performed also at more extreme values, i.e. zero and four. Measurements were performed for about one minute.

EXPERIMENTAL RESULTS - I

For a first type of camera (Axis 2100 network camera) under low daylight circumstances, i.e. at a frame rate of 10 fps, the performance was measured for reference first without application of the present invention which yielded:

165 KB/s for standard X.264, #Bframes=0
116 KB/s for standard X.264, #Bframes=4

Thereafter, the same experiment and measurements were performed for the invention, which yielded:

55 KB/s for X.264 with invention, #Bframes=0
45 KB/s for X.264 with invention, #Bframes=4

So, for low light conditions, we see a reduction of the bitstream size from 165 KB/s to 55 KB/s when B frames are absent (reduction 66% or a gain with factor 3.0), and a reduction of the bitstream size from 116 KB/s to 45 KB/s when we have 4 B frames per P frame (reduction 61% or a gain with factor 2.6).
For this same first type of camera (Axis 2100 network camera) under normal daylight circumstances, at 15 fps, the measurement results are:

118 KB/s for standard X.264, #Bframes=0
75 KB/s for standard X.264, #Bframes=4

However, when employing the present invention, the yielded results are:

51 KB/s for X.264 with the invention, #Bframes=0
35 KB/s for X.264 with the invention, #Bframes=4

In normal lighting conditions a reduction of the bitstream size from 118 KB/s to 51 KB/s when B frames are absent (#Bframes=0), which constitutes a reduction of 57% or a gain with factor 2.3, and a reduction of the bitstream size from 75 KB/s to 35 KB/s with 4 B frames per P frame (reduction 53% or a gain with factor 2.1).
Further tuning of the invention is considered is possible, but depends highly on the desired application and resulting image quality and reliability upon reproduction of a transmitted bit stream based on the above described algorithm. Nonetheless, it is worth noting that using the invention, it appeared possible to reduce the bitrate to as low as 23.5 KB/s with 4 B frames per P frame (reduction 69% or a gain with factor 3.2). For these settings however it is necessary to judge if the image quality is still acceptable for the application at hand.

EXPERIMENTAL RESULTS - II

Similar results are obtained from measurements with a second type of camera (the Axis 213 network camera). This measurement was done under normal daylight circumstances. Since the image size of this second type of camera is larger than that of the first type of camera (Axis 2100), the frame rate was forcedly lowered first, in order for the recording PC to be able to keep up. However, since the measurement results presented here are all of a relative nature, this does not really alter the interpretation of these results.
Axis 213, normal daylight circumstances, 5 fps :

97 KB/s for standard X.264, #Bframes=0
78 KB/s for standard X.264, #Bframes=4

But when applying the present invention:

44 KB/s for X.264 with the invention, #Bframes=0
22 KB/s for X.264 with the invention, #Bframes=4

A reduction of the bitstream size from 97 KB/s to 44 KB/s is achieved when B frames are absent (reduction 55% or a gain with factor 2.2), and a reduction of the bitstream size from 78 KB/s to 22 KB/s is achieved when there are 4 B frames per P frame (reduction 72% or a gain with factor 3.5). If we compare these figures with the ones obtained with the Axis 2100, we see more gain when making use of B frames (B > 0). The reason for this is that the reduction in the bitrate required for transmission is highly dependent of the scene and the noise present. The Axis 213 is a better camera, with less noise and a more stable white balance, and the scene in the images can have been simpler compared to scene used for testing the invention with the Axis 2100 network camera.

Also, further tuning of the DSBM is possible in this situation, and it turned out to be possible to reduce the bitrate to as low as 13.8 KB/s with 4 B frames per P frame (reduction 82% or a gain with factor 5.6). For these settings however it is necessary to judge if the image quality is still acceptable for the application at hand.

For the sake of further comparison it is noted here that the Axis 213 network camera also provides the possibility to generate an mpeg4 stream, albeit without AVC protocol. With the present setting of 5 fps and the same resolution as used above, the stream runs on: 46 KB/s. However, assuming this is the best direct result, the best result of H.264 with the present invention applied thereto is still better than the MPEG4 stream by a factor 3.3.

To provide an impression of the image quality, we have captured measurement results for more extreme situations, so they can be compared.

*Implementation.*

The method and system according to the invention can be implemented in several ways. As discussed before, only the image registering side - or rather the sender - of a system comprising also a player / receiver needs to be modified. Any player (receiver) capable of processing H.264 should be able to decode the received image stream, when constructed according to the present invention. On the registering or transmitter side, there are several options to implement the new technique.

The most simple way is the adaptation of the software that is used to encode the image stream with H.264. Any device that is freely programmable and able to encode for H.264 is capable of executing the extra instructions needed for the present invention. Of course, the module itself will make the software somewhat larger, and will consume some RAM of its own, but compared to the implementation of H.264 itself, any such increase will prove to be minor. For example, an ARM 9 (which is an MCU) with H.264 implemented will be able to execute the present invention as well.

In as far as H.264 is implemented into an FPGA, and a user has or obtains access to the VHDL or Verilog sources, these can be modified to incorporate the present invention. Some extra memory may be needed for image processing, but the demand is not high, and likely to be present already in the hardware of a camera or connected processor.

Lastly, in some situations only a dedicated closed chip is available, that performs the H.264 encoding. Such a chip requires the bare image signal and produces the H.264 encoded steam on the 'other side'. In this case, the invention may still be implemented, by preprocessing sequences of images being sent to this dedicated chip, and if it is possible to synch the selection of I, P and B frames between the dedicated chip and such a preprocessor.

The present invention enables a more efficient compression compared to the current H.264 technology, or any other differential based prior art technology. Presently the primary field of application is surveillance cameras. In this field, but quite possibly also in other fields of use (the present invention is not restricted to H. 264) the present invention (herein above sometimes referred to as Differential Super Block Masking - DSBM), gives particularly good results, and can be implemented as an "add on" to the standard H.264 compression algorithm.

The present invention is here disclosed in an embodiment with the H.264 protocol specifications, to which the invention is likewise also not restricted. Therefore any decoder capable of displaying a standard H.264 image stream (or similar image stream according to a comparable protocol or specification) should be able to display the modified stream according to the invention. Thus, no adaptation is needed on the receiving side.

*EXEMPLARY CODE*

The methods above have been implemented in the VLC code (Video LAN VLC Media Player). Below we list the routines which do the testing, correction and replacement of the superblocks. This code is not production code, but serves merely as an example. Integration of this code in the X.264 library used by VLC code itself is not provided in this disclosure of the invention, for this may depend on many factors, which are well within reach of the normally skilled person to achieve, within the confines of such relevant factors.

```
/* for axis2100 */
#define BR_height 480
#define BR_width  640
/*for axis213 */
#define BR_height 576
#define BR_width  768
```

```
#define BR_sbw (BR_width / BR_sb_width)

#define BR_sbh (BR_height / BR_sb_height)

#define BR_sb_width  32

#define BR_sb_height 32


/* Useful parameter values to start with */

static int BR_low_thresh_level_bw = 24;

static int BR_low_thresh_level_bw_low  = 16;

static int BR_low_thresh_level_bw_high = 32;

static int BR_low_thresh_level_col = 12;

static int BR_low_thresh_count = 2;

static int BR_mark_border = 1;


/* state if you want luminance and color correction. */

static int  defCORRECT = bTrue;


/* Store the last I frame for comparisson of the superblocks and possible replacement. */

void x264_store_image( x264_t *h, x264_picture_t *pic_in)

{ int i,j,p;

 for (i=0; i<(3*h->param.i_width*h->param.i_height/2) ; i++) { imgBuf[i] = *(pic_in->img.plane[0]+i); }

 for (p=0; p<3; p++)

 { for (i=0; i< BR_sbw ; i++)

  { for (j=0; j< BR_sbh ; j++)

   { imgSum[p][i][j] = x264_sum_superblock(h,pic_in,i,j,p); } } } }


/* Calculate the sum of a superblock in the current frame. */

int x264_sum_superblock( x264_t *h, x264_picture_t *pic_in, int sb_x, int sb_y, int plane)

{ int i, j, uiResult=0, uiLoc;

 if (plane == 0)

 { for (i=0; i<BR_sb_height ; i++)

  { for (j=0; j<BR_sb_width ; j++)

   { uiLoc = ((sb_y*BR_sb_height)+i)*h->param.i_width+(sb_x*BR_sb_width)+j;

    uiResult += *(pic_in->img.plane[0]+uiLoc); } } }

 if ((plane == 1) || (plane == 2))

 { for (i=0; i<BR_sb_height/2 ; i++)

  { for (j=0; j<BR_sb_width/2 ; j++)

   { uiLoc = ((sb_y*BR_sb_height/2)+i)*h->param.i_width/2+(sb_x*BR_sb_width/2)+j;

    uiResult += *(pic_in->img.plane[plane]+uiLoc); } } }
```

```
return uiResult; }


/* Replace the superblock of the current frame with that of the most recent I frame. */

void x264_recall_superblock( x264_t *h, x264_picture_t *pic_in, int sb_x, int sb_y)

{ int i, j, uiLoc, uiLoc1, uiLoc2, uiSum0,uiSum1,uiSum2;

 if (defCORRECT == bTrue)

 { uiSum0 = x264_sum_superblock(h,pic_in,sb_x,sb_y,0);

  uiSum1 = x264_sum_superblock(h,pic_in,sb_x,sb_y,1);

  uiSum2 = x264_sum_superblock(h,pic_in,sb_x,sb_y,2); }

 else

 { uiSum0 = 1;

  uiSum1 = 1;

  uiSum2 = 1; }

 for (i=0; i<BR_sb_height ; i++)

 { for (j=0; j<BR_sb_width ; j++)

  { uiLoc = ((sb_y*BR_sb_height)+i)*h->param.i_width+(sb_x*BR_sb_width)+j;

  if (defCORRECT == bTrue)

  {  *(pic_in->img.plane[0]+uiLoc)  = (imgBuf[uiLoc]*uiSum0)/imgSum[0][sb_x][sb_y]; }

  else

  { *(pic_in->img.plane[0]+uiLoc)  = imgBuf[uiLoc]; }}}

 for (i=0; i<BR_sb_height/2 ; i++)

 { for (j=0; j<BR_sb_width/2 ; j++)

  { uiLoc = ((sb_y*BR_sb_height/2)+i)*h->param.i_width/2+(sb_x*BR_sb_width/2)+j;

   uiLoc1 = h->param.i_width*h->param.i_height + uiLoc;

   uiLoc2 = h->param.i_width*h->param.i_height*5/4 + uiLoc;

  if (defCORRECT == bTrue)

  { *(pic_in->img.plane[0]+uiLoc1)  = (imgBuf[uiLoc1]*uiSum1)/imgSum[1][sb_x][sb_y];

   *(pic_in->img.plane[0]+uiLoc2)  = (imgBuf[uiLoc2]*uiSum2)/imgSum[2][sb_x][sb_y]; }

  else

  { *(pic_in->img.plane[0]+uiLoc1)  = imgBuf[uiLoc1];

   *(pic_in->img.plane[0]+uiLoc2)  = imgBuf[uiLoc2]; } } } }
```

## Claims

1. A method of processing and transmitting and/or recording sequences of images, each image depicting a scene to assemble in the sequence a movie, the method comprising:

   - preprocessing subsequent images individually, such as at least one of: quantization; macroblock division; and transformation, for instance discrete cosine transformation, to obtain a sequence of preprocessed images;
   - encoding for compression of the preprocessed images prior to transmission or recording to decrease the transmission or recording capacity required for transmission or recording of the sequence of preprocessed images, by

\* periodically allowing individual images to pass to transmission or recording without encoding; and
\* encoding intermediate images in the sequence between the uncompressed images by replacing these intermediate images with differences relative to a most recently passed uncompressed image,

**CHARACTERIZED BY**, prior to encoding of the intermediate images:
- in at least one of the intermediate images, identifying areas where the intermediate images have not or at least not significantly changed relative to the most recently passed uncompressed image; and
- replacing the identified areas in the intermediate images by corresponding areas from the most recently passed uncompressed image, wherein these areas correspond in location in the scene according to at least one of the uncompressed and the intermediate images.

2. The method according to claim 1, wherein the areas in the intermediate images and in the uncompressed images correspond in size.

3. The method according to claim 1 or 2, wherein the uncompressed and intermediate images comprise an integer number of areas.

4. The method according to claim 1, 2 or 3, wherein the areas have a size that is one of the sizes from the group, comprising: 20 * 15 pixels, 24 * 18 pixels, and 32 * 32 pixels.

5. The method according to any one of the preceding claims, wherein identifying the areas where the intermediate images have not or at least not significantly changed relative to the most recently passed uncompressed image comprises comparing the intermediate image and the uncompressed image in the form of the original images.

6. The method according to any one of the preceding claims, wherein identifying the areas where the intermediate images have not or at least not significantly changed relative to the most recently passed uncompressed image comprises comparing the intermediate image and the uncompressed image in the luminance channel.

7. The method according to any one of the preceding claims, wherein identifying the areas where the intermediate images have not or at least not significantly changed relative to the most recently passed uncompressed image comprises comparing the intermediate image and the uncompressed image in at least one of the chroma channels.

8. The method according to any one of the preceding claims, wherein identifying the areas where the intermediate images have not or at least not significantly changed relative to the most recently passed uncompressed image comprises comparing the intermediate image and the uncompressed image area by area.

9. The method according to any one of the preceding claims, wherein identifying the areas where the intermediate images have not or at least not significantly changed relative to the most recently passed uncompressed image comprises defining a difference between at least a relevant area of the intermediate image and the uncompressed image and comparing the difference with a predetermined threshold value, and deciding an area is to be replaced if the difference is below the threshold value.

10. The method according to claim 9, wherein the difference comprises a function based on pixel-by-pixel comparison within one area in at least one of the luminance and the chroma channels.

11. The method according to claim 9 or 10, wherein the difference comprises a function based on statistical analysis within one area or between area's.

12. The method according to claim 10 or 11, comprising suppressing in the function the influence of sparkles or reflections, where the function comprises a sparkle-compensation factor.

13. The method according to claim 10, 11 or 12, comprising suppressing in the function the influence of changes in lighting or camera induced changes in white balance, where the function comprises a lighting and white balance normalizing factor.

14. The method according to any one of the preceding claims 10 - 13, comprising suppressing in the function the influence of changes in camera induced changes in color balance, where the function comprises a color balance normalizing factor.

**15.** A system for transmitting and/or recording sequences of images, each image depicting a scene to assemble in the sequence a movie, the system comprising:

- a preprocessor arranged to preprocess subsequent images individually, such as at least one of: quantization; macroblock division; and transformation, for instance discrete cosine transformation, to obtain a sequence of preprocessed images;
- an encoder arranged to compress the preprocessed images prior to transmission and/or recording to decrease the transmission or recording capacity required for transmission or recording of the sequence of preprocessed images, by

* periodically allowing individual images to pass to transmission or recording without encoding; and
* encoding intermediate images in the sequence between the uncompressed images by replacing these intermediate images with differences relative to a most recently passed uncompressed image,

**CHARACTERIZED BY**
- an identifier arranged to, prior to encoding of the intermediate images, in at least one of the intermediate images, identify areas where the intermediate images have not or at least not significantly changed relative to the most recently passed uncompressed image; and
- a replicator arranged to replace the identified areas in the intermediate images by corresponding areas from the most recently passed uncompressed image, wherein these areas correspond in location in the scene according to at least one of the uncompressed and the intermediate images.

1

Extended Profile
SP frames
SI frames
FMO
Redundant slices

Main Profile

Baseline profile

I frames
P frames
CAVLC

B frames
Interlace

CABAC

## FIG. 1

2

3

Y

4

CrCb

## FIG. 2

FIG. 3

FIG. 4

FIG. 5

FIG. 6

Reference Frame

Current Frame

A

A

B

17

## FIG. 7

18

## FIG. 8

FIG. 9

FIG. 10

Europäisches
Patentamt

European
Patent Office

Office européen
des brevets

# EUROPEAN SEARCH REPORT

Application Number

EP 11 15 3367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HONG-JIE HUANG ET AL: "Semantic Video Adaptation using a Preprocessing Method for Mobile Environment", COMPUTER AND INFORMATION TECHNOLOGY (CIT), 2010 IEEE 10TH INTERNATIONAL CONFERENCE ON, IEEE, PISCATAWAY, NJ, USA, 29 June 2010 (2010-06-29), pages 2806-2810, XP031758141, ISBN: 978-1-4244-7547-6 * the whole document * | 1-15 | INV. H04N7/26 H04N7/36 H04N7/50 H04N7/18 |
| A | QINGHUA LI ET AL: "Improved video compression for indoor video surveillance application", ADVANCED COMPUTER CONTROL (ICACC), 2010 2ND INTERNATIONAL CONFERENCE ON, IEEE, PISCATAWAY, NJ, USA, 27 March 2010 (2010-03-27), pages 452-455, XP031691262, ISBN: 978-1-4244-5845-5 * the whole document * | 1-15 | |
| A | CHEN P ET AL: "Video coding using extended block sizes", 36. VCEG MEETING; 8-10-2008 - 10-10-2008; SAN DIEGO, US; (VIDEO CODING EXPERTS GROUP OF ITU-T SG.16),, 15 October 2008 (2008-10-15), XP030003645, * the whole document * | 1-15 | TECHNICAL FIELDS SEARCHED (IPC)<br><br>H04N |

The present search report has been drawn up for all claims

| Place of search | Date of completion of the search | Examiner |
|---|---|---|
| Munich | 5 May 2011 | Montoneri, Fabio |

EPO FORM 1503 03.82 (P04C01)